# EUROPEAN PATENT SPECIFICATION

(11) **EP 2 744 293 B1**
(45) Date of publication and mention of the grant of the patent: **02.03.2016**
(21) Application number: 12290432.9
(22) Date of filing: 12.12.2012
(51) Int. Cl.: H04W 76/02

(54) **A telecommunications network, a node, and a method of data transmission**
Telekommunikationsnetzwerk, Knoten und Verfahren der Datenübertragung
Réseau de télécommunications, n'ud et procédé de transmission de données

(43) Date of publication of application: 18.06.2014
(73) Proprietor: ALCATEL LUCENT, 92100 Boulogne-Billancourt (FR)
(72) Inventor: Fuchs, Rolf, 70435 Stuttgart (DE)
(74) Representative: Sarup, David Alexander

(56) References cited:
- WO-A1-01/62026
- US-A1- 2006 193 292
- US-A1- 2010 169 498
- US-A1- 2010 220 642
- US-A1- 2010 260 101
- US-A1- 2011 244 899
- ALCATEL-LUCENT ET AL: "Restructuration of TR 23.829", 3GPP DRAFT; S2-101719 WAS 1449_23829 RESTRUCTURING_R0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 25 February 2010 (2010-02-25), XP050434102, [retrieved on 2010-02-25]

## Description

### Field of the Invention

The present invention relates to telecommunications, in particular to wireless telecommunications.

### Description of the Related Art

In a known cellular telecommunications network, user data is transmitted via a base station or the like when one user terminal is communicating with another user terminal. This causes loading on the telecommunications network that the base station is part of. With increasing data traffic spectral efficiency is degraded, and cell loading, intra-cell interference and inter-cell interference are all increased. Also due to the limited data rates in the cell, transmission times increase as the base station becomes increasing loaded.

Some of these effects are alleviated by enabling direct device-to-device (D2D) communications between user terminals that are located close enough together. D2D communications save transmit power of the user terminals with consequential battery power saving, and cause there to be less transmissions by the base stations resulting in reduced interference in the cellular network. For two user terminals to set up a direct D2D communication, a discovery procedure is involved whereby one user terminal 'discovers' the other. Two main types of discovery procedure are typically used. One involves broadcasting and the other involves probing.

In the broadcasting approach, a first node, for example a base station, WLAN access point, or even a user terminal, broadcasts information that is received by other nodes. Depending on the radio access technology, various methods are used to broadcast information. For example in IEEE802.11 WiFi networks, beacons are used to periodically send out information such as Service Set Identifier (SSID), timestamp, supported data rates and capability information. For example, in an ad-hoc network, beacons are sent out by access points and at least one node. For example in cellular networks, for example of GSM, UMTS, or LTE type, base stations broadcast cell-related information to user terminals within the cell.

In the probing approach, a node, for example a user terminal, sends a discovery request (for example a probe-request in 802.11) and receives a discovery answer (for example a probe-response in 802.11). The discovery answer typically includes capability information and indicators of supported data rates.

As further background, opportunistic networks (ONs) are known which involve temporarily connecting various network nodes in a dynamic manner. There are infrastructure-guided ONs in which network operators govern the setting up of the temporary dynamic connections so as to provide such connections (for example mobile connections of voice, data, or multimedia type) when needed. These are often called operator governed Opportunistic networks. Such networks improve spectral efficiency and enable additional services to be provided. ONs may include network nodes such as base stations, other types of access points, and user terminals.

Various types of operator governed opportunistic networks are known. For example, in some types, direct device-to-device (D2D), for example terminal-to-terminal (T2T) communications are known.

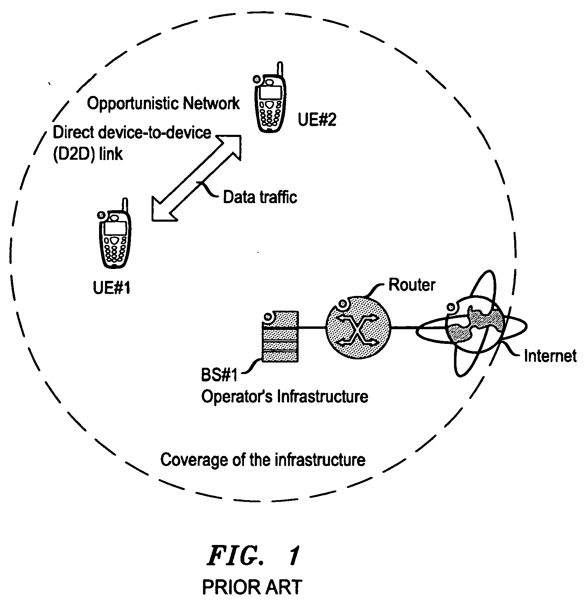

As regards D2D communications, a known approach is shown in Figure 1.

As shown in Figure 1, both the user terminals, UE#1 and UE#2, are connected via a base station BS#1 connected via a local router to the internet. The connections to the base station are for control signalling whereas user traffic is exchanged directly via the D2D connection between the two user terminals. The control signalling indicates for example that an opportunistic direct connection may be set up under the control of the network ('operator governed').

International (P.C.T.) Patent Publication WO 01/62026A1 and United States Patent Application Publication US2010/0260101A1 provide technical background.

It is known from WO 01/62026A1 to provide a method of data transmission between a first user terminal and a second user terminal in a cellular telecommunications network comprising base stations providing respective cells, the method comprising:
the network detecting a call set up request from the first user terminal in respect of the second user terminal;
the network determining that the first and second user terminals are in the same or neighbouring small cells; and
the network instructing at least one of the first and second terminals to set up a direct device -to-device, D2D, connection between the first and second user terminals;
in which the user data is sent via the D2D connection, and control signalling is sent via at least one of the base stations.

### Summary

The present invention is characterised over the disclosure of WO 01/62026A1 in that the base stations are small cell base stations;
in which the two user terminals are in the same cell, control signalling is sent via the small cell base station providing that cell using Local IP Access, LIPA, and upon the signal quality of the D2D connection going below a given threshold, further user data is instead sent via the small cell base station providing that cell using Local IP Access, LIPA; or
in which the two user terminals are in neighbouring cells, control signalling is sent via the two small cell base stations using Selected Internet Protocol Traffic offload, SIPTO, and upon the signal quality of the D2D connection going below a given threshold, further user data is instead sent via the two small cell base stations using Selected Internet Protocol Traffic offload, SIPTO.

The reader is now referred to the appended independent claims. Some preferred features are laid out in the dependent claims.

An example of the present invention is a method of data transmission between a first user terminal and a second user terminal in a cellular telecommunications network. The network comprises small cell base stations providing respective small cells. The method comprises: the network detecting a call set up request from the first user terminal in respect of the second terminal, the network determining that the first and second user terminals are in the same or neighbouring small cells, and
the network instructing at least one of the first and second terminals to set up a direct device -to-device (D2D) connection between the first and second user terminals.

Preferred embodiments have advantages over known approaches in which user data is sent via a small cell base station using LIPA or SIPTO or via the operator's IP core network.

Preferred embodiments have an advantage that in consequence of the network tracking which cell user terminals are in, energy intensive and uneconomical discovery procedures such as broadcasting or probing are avoided.

Preferred embodiments provide that less data is passed via the backhaul to operator's IP core network, and by using D2D links, data is passed through fewer nodes, so speed and reliability are improved. Using the direct device-to-device (D2D) connections enable the cellular network to offload traffic to D2D connections, and so increase spectral usage efficiency. Specifically, as cell base station load is reduced, both intracell interference and intercell interference may be reduced. This is because D2D connections involve lower signal powers and data not passing via the cellular network. In consequence, the spectral efficiency of neighbouring cells may also increased.

Preferred embodiments may be considered as providing operator-governed opportunistic direct device-to-device communications between mobile user terminals, with the support of the small cell telecommunications network.

Preferred embodiments allow automatic determination that user terminals are in the same or neighbouring cells so are suitable for direct D2D connection. In some embodiments, a request for D2D connection may be made by a user of a user terminal.

The user data offload that occurs in preferred embodiments enable networks to support additional services, for example to user terminals having high data rate requirements. Due to the D2D connections, local network equipments, for example small cell base stations, may be offloaded of their data traffic to a significant extent. In some embodiments the associated control signalling goes into an operator's IP core network in the telecommunications network, but not the user data which is passed by direct D2D connection.

In preferred embodiments, a direct D2D connection becoming weaker may cause further user data traffic between the two users to be shifted into the network for example over a LIPA connection. (A LIPA connection is via a shared base station, so the data does not pass via the operator's IP core network which is further in the telecommunications network.)

In some preferred embodiments the small cell base stations are, for example, LTE HeNodeB and/or UMTS/3G Home NB.

The present invention also relates to a corresponding telecommunications network.

### Brief Description of the Drawings

Embodiments of the present invention will now be described by way of example and with reference to the drawings, in which:
Figure 1 is a diagram illustrating a network including a known network-controlled opportunistic D2D connection (PRIOR ART),
Figure 2 is a diagram illustrating a network including a known conventional network-controlled connection in which the base station is a small cell base station (LTE HeNB) (PRIOR ART),
Figure 3 is a diagram illustrating a network according to a first embodiment of the present invention, the network including a small cell base station of LTE HeNB type, within which there is a network-controlled opportunistic D2D connection,
Figure 4 is a message sequence diagram illustrating example messaging for D2D connection setup between two user terminals in the network shown in Figure 3,
Figure 5 is a message sequence diagram illustrating example messaging in Network Address Translation in the network shown in Figure 2, and
Figure 6 is a diagram illustrating a network according to a second embodiment of the present invention, the network including small cell base stations of LTE HeNB type each providing a cell and in which there is a network-controlled opportunistic D2D connection between two user terminals in different cells.

### Detailed Description

We first describe two known examples, then turn to describing example embodiments in detail.

### Known approach

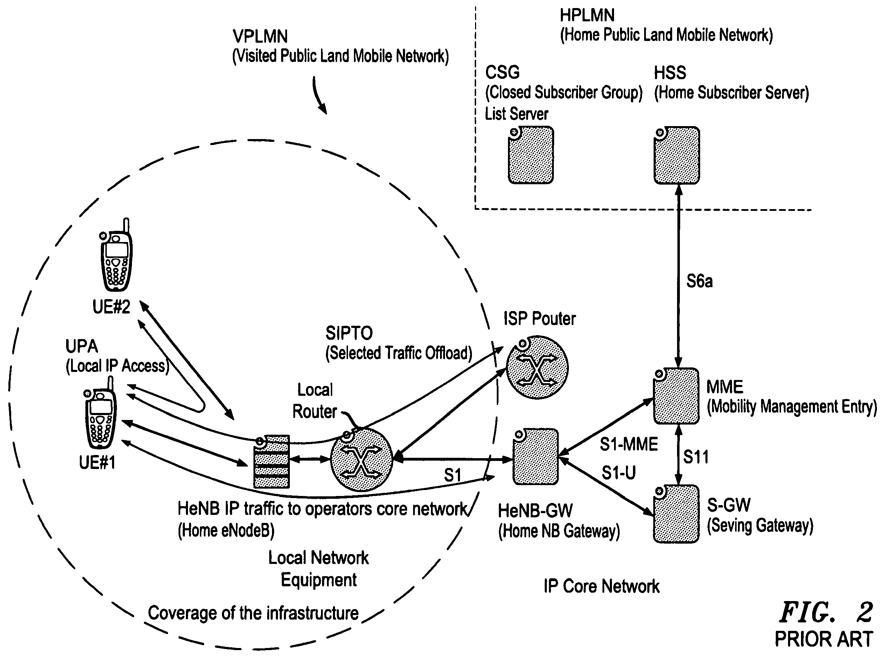

According to a first known approach, in a network involving small cell base stations of Long Term Evolution (LTE) Home evolved NodeB (HeNB) or Universal Mobile Telecommunications System (UMTS) Home NodeB (HNB) type, when the two user terminals are communicating with each other, data is conventionally transmitted via the small cell base station a local router and the operator's core network. However, it is known that the core network may be avoided, to some extent, in a second known approach shown in Figure 2.

As shown in Figure 2, in a network, opportunistic connections are supported in a small cell of LTE HeNodeB type, where LTE denotes Long Term Evolution and HeNodeB denotes a home base station. For simplicity, Figure 2 shows a single HeNodeB and two user terminals. A Long Term Evolution (LTE) Home evolved NodeB (HeNB) is sometimes denoted a 3G HeNB.

As shown in Figure 2, a Home Public Land Mobile Network (HPLMN) includes a Home Subscriber Server (HSS) and a Closed Subscriber Group list server (CSG). As shown in Figure 2, a Visited Public Land Mobile Network (VPLAN) consists of a local network equipment and an Internet Protocol (IP) network. The local network equipment consists of the small cell base station (HeNodeB) and a local router. The small cell base station is connected via the local router to the IP core network. The IP core network includes a small cell gateway (HeNodeB-GW), a serving gateway (S-GW) and a Mobility Management Entity (MME), and Internet Service Provider (ISP) router. The local router is connected to the ISP router, and uses IP addresses, for access to the broader internet.

The small cell base station in this example is an LTE Home eNodeB, sometimes referred to as a HeNodeB. The small cell base station is for connection of suitable Third Generation Partnership Project (3GPP) user terminals over an LTE wireless interface to a mobile operator's IP core network using the broadband IP backhaul provided by the local router. In an alternative embodiment, the air interface may be a EUTRAN air interface.

The small cell gateway, which is located at the premises of the network operator, enables the small cell base station to gain access to the network operator's IP core network. The small cell gateway is an aggregator that concentrates small call traffic received over an S1 interface providing an S1-MME interface to the MME and an S1-U interface towards the serving gateway.

The Mobility Management Entity (MME) controls establishment of user plane tunnels and establishes user plane bearers between the small cell base station and the small cell gateway. The MME is connected via an S6a interface to the Home Subscriber Server (HSS) and is connected via an S11 interface to the serving gateway.

The ISP router allows data packets to be routed directly to the internet without going via the operator's IP core network.

As shown in Figure 2, the user terminal UE#1 wishes to communicate with the second user terminal UE#2, and both user terminals are in the same small cell. The two user terminals are connected to the cellular network via the small cell base station (HeNodeB). The communications between the two terminals basically go via the small cell base station the local router and the IP core network.

Local IP access (LIPA) is a known mechanism whereby an IP capable user terminal may communicate with that another IP capable device directly via a small cell base station, without going further within the mobile operator's IP core network. The IP capable user terminal is connected via the small cell base station to the IP capable device within in a residential IP network within a home or office. This may be considered effectively as an IP Traffic offload from the perspective of the operator's IP core network.

Another known mechanism is Selected IP Traffic Offload (SIPTO) which allows a small cell base station to provide access for a user terminal connected via the small cell base station to an IP network, for example via the local router and ISP router to the Internet, instead of via the operator's IP core network. LIPA and SIPTO links are both shown in Figure 2.

LIPA and SIPTO are known, for example, from Third Generation Partnership Project (3GPP) Release 10 standards, for example TR23.829 "Local IP Access and Selected IP traffic Offload (LIPA-SIPTO)".

From considering the known system described with reference to Figure 2 above, the inventor realised that using LIPA and SIPTO enabled some traffic to not need to go via the operator's IP core network (in other words' be "offloaded" from that IP core network). However in the Figure 2 approach, that traffic would pass via the local network namely the small cell base station and local router.

The inventor also realised that there is high energy consumption and signalling overheads on user terminals in the known systems during the procedures for discovery that two user terminals are near each other.

The inventor also realised that when two mobile devices are relatively close together it is appropriate to have a direct device-to-device (D2D) link between the user terminals. The setup of this link is supported by the cellular network ('infrastructure supported') and is opportunistic in that such links are set up as and when appropriate. User data is transmitted via the D2D link.

We now turn to describing example embodiments.

### Network

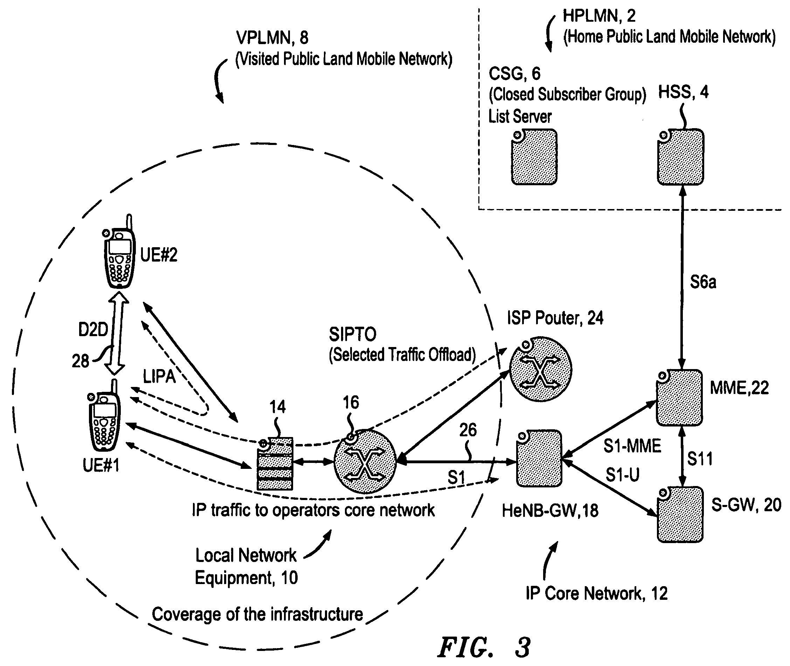

As shown in Figure 3, in a network opportunistic D2D connections are supported in a small cell of LTE HeNodeB type, where LTE denotes Long Term Evolution and HeNodeB denotes a home base station. For simplicity, Figure 3 shows a single HeNodeB and two user terminals.

As shown in Figure 3, a Home Public Land Mobile Network (HPLMN) 2 includes a Home Subscriber Server (HSS) 4 and a Closed Subscriber Group list server (CSG) 6. As shown in Figure 3, a Visited Public Land Mobile Network (VPLAN) 8 consists of a local network equipment 10 and an Internet Protocol (IP) network 12. The local network equipment 10 consists of the small cell base station (HeNodeB) 14 and a local router 16. The small cell base station 14 is connected via the local router 16 to the IP core network12. The IP core network 12 includes a small cell gateway (HeNB-GW) 18, a serving gateway (S-GW) 20, a Mobility Management Entity (MME) 22, and Internet Service Provider (ISP) router 24. The local router 16 is connected to the ISP router 24, and uses IP addresses, for access to the broader internet.

The small cell base station 14 in this example is an LTE Home eNodeB, sometimes referred to as a HeNodeB or HeNB. The small cell base station is for connection of suitable Third Generation Partnership Project (3GPP) user terminals UE#1,UE#2 over an LTE wireless interface, namely the local network equipment 10, to the mobile operator's IP core network 12 using the broadband IP backhaul 26 provided by the local router 16. In an alternative embodiment (not shown), the wireless interface may be a EUTRAN air interface.

The small cell gateway 18, which is located at the premises of the network operator, enables the small cell base station 14 to gain access to the network operator's IP core network 12. The small cell gateway 18 is an aggregator that concentrates small call traffic received over an S1 interface providing an S1-MME interface to the MME 22 and an S1-U interface towards the serving gateway 20.

The Mobility Management Entity (MME) 22 controls establishment of user plane tunnels and establishes user plane bearers between the small cell base station and the small cell gateway. The MME 22 is connected via an S6a interface to the Home Subscriber Server (HSS) 4 and is connected via an S 11 interface to the serving gateway 20.

The ISP router 24 allows data packets to be routed directly to the internet (not shown) without going via the operator's IP core network 12.

### D2D Link Discovery

As shown in Figure 3, the user terminal UE#1 wishes to communicate with the second user terminal UE#2, and both user terminals are in the same small cell provided by the small cell base station 14. Accordingly an infrastructure supported, opportunistic direct D2D link is used as described in more detail as follows.

The user terminals are both attached to the infrastructure, namely the small cell base station 14, for control signalling, for example indicating the suitability of an opportunistic D2D link. The control signalling passes via the small cell base station 14 the local router 16 and the IP core network 12.

If the two user terminals are in the same small cell or in neighbouring small cells then a direct D2D link is likely to be worthwhile. A determination is made whether the two user terminals are in the same or neighbouring small cells. Specifically the MME 22 knows which user terminals are in which small cells. In the example shown in Figure 3, the MME 22 recognises that UE#2 is in the same small cell as UE#1.

### D2D link

Having discovered that the UE#2 is in the same small cell (or a neighbouring small cell) as UE#1, a D2D link 28 is set up and user traffic is exchanged directly between the two user terminals UE#1, UE#2 via the D2D link 28 as shown in Figure 3.

In this example, if the D2D link becomes poor, in other words below a given quality threshold, data traffic is displaced onto the LIPA connection so as to pass via the small cell base station 14, without going via the operator's IP core network.

Furthermore, in this example, other data traffic, for example between the terminals and other users elsewhere is passed via the ISP router 24 to the internet (not shown) directly without going via the operator's IP core network 12.

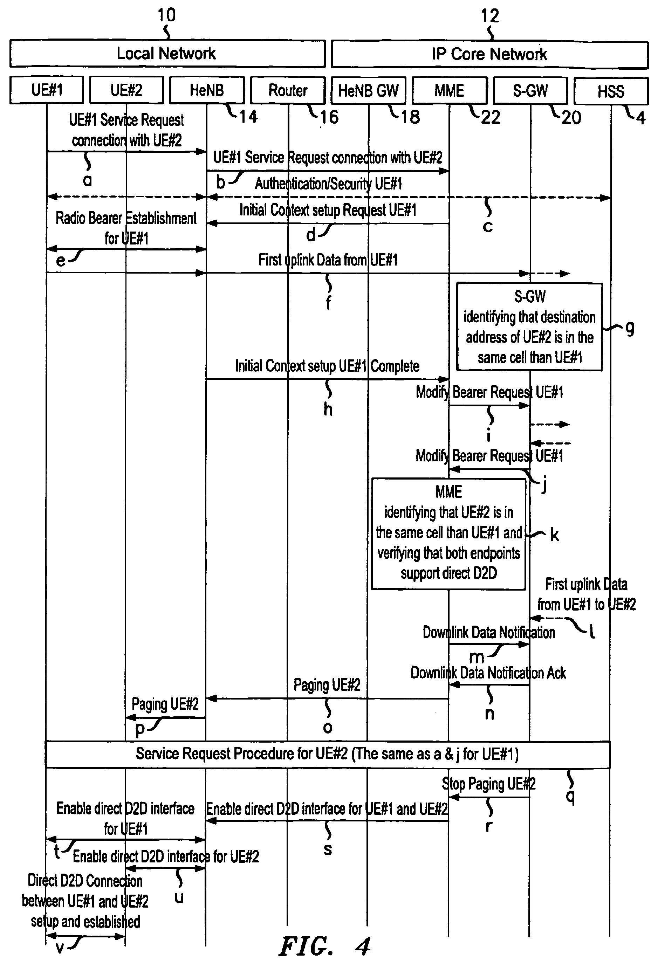

An example of how the D2D link is set up will now be described with reference to Figure 4.

As shown in Figure 4, UE#1 initiates (step a) a UE triggered service request with the small cell base station 14. A standard service request procedure as specified in 3GPP Technical Specification 23.401 (version11.3.0) is then undertaken as shown in steps a to j. From the first uplink data provided (step f) the S-GW 20 identifies (step g) that the destination address of UE#2 is in the same cell as UE#1 so communicates (steps i,j) this information to the MME 22. The MME additionally verifies (step k) that both of the UE#1 and UE#2 endpoints support direct D2D communication.

Following the above and some subsequent notification and paging steps (steps m to p) a service request procedure (step q) is undertaken for UE#2, essentially as done for UE#1 (and described with reference to steps a to j above), although this second service request procedure is network triggered. This service request procedure (step q) is also in line with 3GPP Technical Specification 23.401 (version11.3.0).

The S-GW 20 then sends (step r) a stop paging message to the MME 22 which then sends (step s) a message to the small cell base station enabling the direct D2D connection between UE#1 and UE#2. The small cell base station then instructs (step t) UE#1 in setting up the connection and instructs (step u) UE#2 in setting up the connection. The direct D2D connection is then established (step v).

In this example the network automatically sets up D2D connections as above when appropriate, in other words when a call set up request is made form a user terminal to another user terminal that is determined as being sufficiently close.

In an alternative but similar embodiment(not shown), one user selects the direct D2D service, for example a user controls his user terminal UE#1, when he sees the user of UE#2, nearby to initiate the network to determine that the two user terminals are nearby and if appropriate set up a D2D connection. This could be for example, between children in a school yard or work colleagues in an office. The network then determines whether a direct D2D connection to UE#2 is appropriate upon a call set up request from UE#1 in respect of UE#2 being detected by the network.

### LIPA/SIPTO

Returning to the example shown in Figure 3 (and Figure 4), Local IP access (LIPA) is a mechanism whereby an IP capable user terminal may communicate with that another IP capable device directly via a small cell base station, without going further within the mobile operator's IP core network. The IP capable user terminal is connected via the small cell base station to the IP capable device within in a residential IP network within a home or office. This may be considered effectively as an IP Traffic offload from the perspective of the operator's IP core network. Signalling still passes via the operator's IP core network.

Another mechanism is Selected IP Traffic Offload (SIPTO) which allows a small cell base station to provide access for a user terminal connected via the small cell base station to an IP network, for example via the local router and ISP router to the Internet, instead of via the operator's IP core network. LIPA and SIPTO links are both shown in Figure 3.

LIPA and SIPTO are known, for example, from Third Generation Partnership Project (3GPP) Release 10 standards.

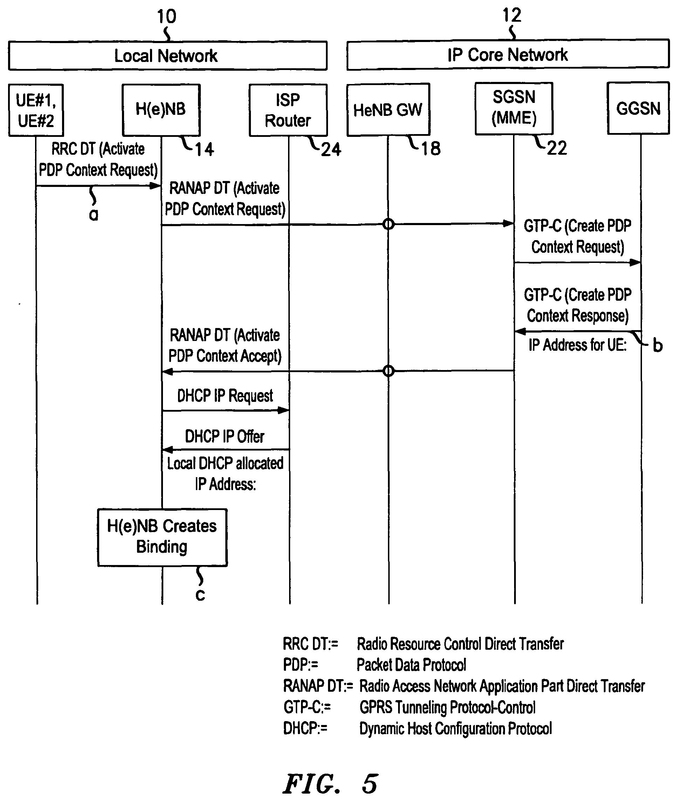

In the network shown in Figure 3, both LIPA and SIPTO are used. One approach used here, from the range of approaches defined for LIPA-SIPTO, is for Local IP access (LIPA) and Selected IP Traffic Offload (SIPTO) to occur at the HeNodeB by Network Address Translation. This is illustrated in Figure 5.

For completeness, how this Network Address Translation is done is now described with reference to Figure 5. Figure 5 includes a network element of a Gateway GPRS support node (GGSN) which is in the operator's IP core network 12 between the MME 22 and the HPLMN 2 shown in Figure 3.

Referring to Figure 5, each of the user terminals has a single Access Point Name (APN). When requesting a PDP Context, the user terminal sends (indicated by a in Figure 4) a 'create PDP Context request' message towards the GGSN which responds (indicated by b in Figure 5) with a 'create PDP Context response' message that gives details of the activated PDP context including an IP address allocated to the user terminal (or an indication of request failure with a reason for failure). The small cell base station 14 reads this message and so obtains the IP address of the user terminal. The small cell base station 14 then requests a local IP subnet address from a Dynamic Host Configuration Protocol (DHCP) server, namely the ISP router 24 in this example, and maps this subnet address to the IP address allocated to the user terminal by the GGSN. This is indicated in Figure 5 by (c).

The small cell base station 14 then inspects all data packets originating from or destined for the user terminals to see the source and destination IP addresses. Deep Packet Inspection (DPI) of the IP headers of data packets is used to do this, to determine which path is to be taken (via the operator's IP core network 12 or via the local router 16. The small cell base station 14 modifies the source or destination IP address, as appropriate, so as to enable proper routing of the data either via a GTP tunnel to the operator's IP core network 12 or to the local router 16.

It may be noted that user terminals may support multiple Packet Data Network (PDN) connections so can use both LIPA and non-LIPA connections. Also for user terminals the usual path to a GGSN is unchanged so handovers are not affected.

### User terminals in neighbouring small cells

Another situation is where the user terminals that wish to communicate with each other are in neighbouring small cells.

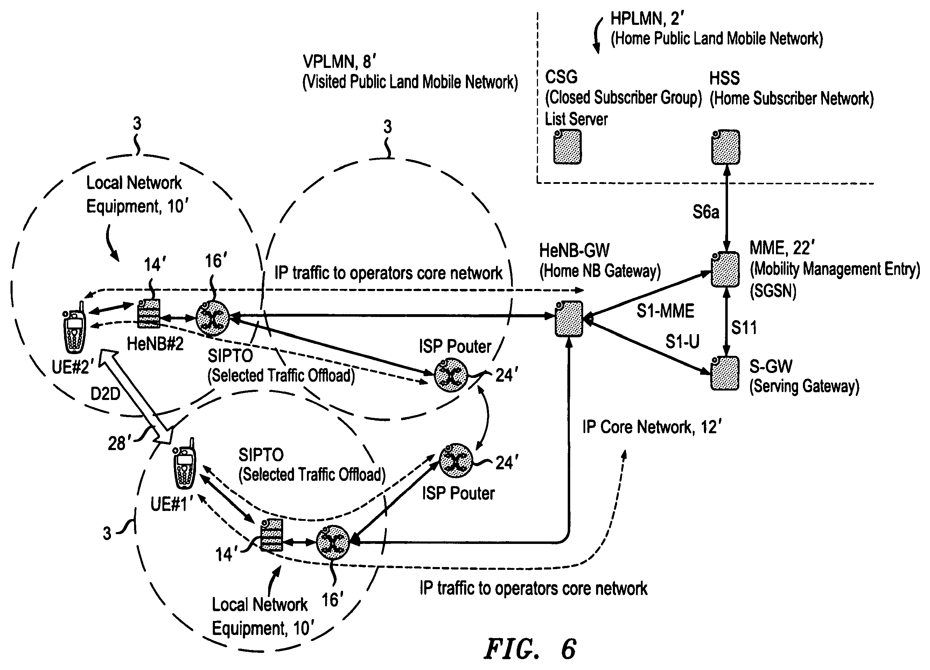

As shown in Figure 6, a network similar to that shown in Figure 3 is provided. In Figure 6, three neighbouring small cells 3 are shown but just two of the base stations 14' and just two user terminals UE#1', UE#2' are shown for simplicity.

A VPLMN 8' and HPLMN 2' are provided basically as described in respect of Figure 3 above. The VPLMN contains local network equipments 10' each consisting of a small cell base station 14' and associated local router 16'. In this example, multiple small cell base stations in contiguous cells share a common operator IP core network 12'. In the example shown in Figure 6, only one operator IP core network 12' applies. In some other similar embodiments, more operator IP core networks may be involved, each supporting one or more small cell base stations.

The two user terminals wish to communicate with each other.

A determination is made whether the two user terminals are sufficiently close together for a direct D2D link to be worthwhile. More specifically, the determination is whether the two user terminals are in the same or neighbouring small cells. Specifically the MME 22' has information of which user terminals are in which small cells. In the example shown in Figure 6, the MME 22' recognises that UE#2 is in a neighbouring small cell to UE#1, and both are connected by a respective small cell base station to the IP core network 12', the two small cell base stations 14' being neighbours.

Usually, traffic is passed from a user terminal via a small cell base station 14' and local IP router 16' to the IP core network 12' or to an ISP router 24' using SIPTO as described above. Traffic may also pass between the two ISP routers 24' shown in Figure 5.

However, on discovery that the two user terminals are connected to neighbouring small cell base stations 14' a D2D link 28'is set up between the two user terminals and user traffic is exchanged directly between the two user terminals UE#1, UE#2 via the D2D link 28'. Then only the control signalling, for example indicating that a D2D link is suitable, is passed via the operator's IP core network 12'.

In consequence, the IP core network is offloaded as data traffic is passed via the D2D link. This approach may be considered an operator-governed opportunistic direct D2D communication between user terminals in neighbouring small cells.

### General

The present invention may be embodied in other specific forms without departing from its essential characteristics. For example the examples described above with reference to Figure 3 to 6 relate to LTE small cell base stations (HeNodeB). For example, other embodiments (not shown), some similar, relate to UMTS small cell base stations, sometimes known as 3G Home NB. A Universal Mobile Telecommunications System (UMTS) Home NodeB (HNB) may be known as a 3G HNB.

The described embodiments are to be considered in all respects only as illustrative and not restrictive. The scope of the invention is, therefore, indicated by the appended claims rather than by the foregoing description.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of data transmission between a first user terminal (UE#1) and a second user terminal (UE#2) in a cellular telecommunications network (8) comprising base stations (14) providing respective cells, the method comprising:
the network detecting a call set up request from the first user terminal in respect of the second user terminal;
the network determining that the first and second user terminals are in the same or neighbouring (Fig 6:3) small cells; and
the network instructing at least one of the first and second terminals to set up a direct device -to-device, D2D, connection (28,28') between the first and second user terminals;
in which the user data is sent via the D2D connection, and control signalling is sent via at least one of the base stations;
**characterised in that** the base stations are small cell base stations;
in which the two user terminals are in the same cell, control signalling is sent via the small cell base station providing that cell using Local IP Access, LIPA, and upon the signal quality of the D2D connection (28) going below a given threshold, further user data is instead sent via the small cell base station providing that cell using Local IP Access, LIPA; or
in which the two user terminals are in neighbouring cells (3), control signalling is sent via the two small cell base stations using Selected Internet Protocol Traffic offload, SIPTO, and upon the signal quality of the D2D connection (28') going below a given threshold, further user data is instead sent via the two small cell base stations using Selected Internet Protocol Traffic offload, SIPTO.

2. A method according to claim 1, in which said determining that the first and second user terminals are in the same or neighbouring small cells is by inspecting a record of in which cells user terminals are located.

3. A method according to any preceding claim in which said determining (Fig 4:k) by the network that the first and second user terminals are in the same or neighbouring small cells is triggered by a request (Fig 4;a) for direct D2D connection from the first user terminal.

4. A cellular telecommunications network (8) comprising base stations (14) providing respective small cells, the network being configured to detect a call set up
request from a first user terminal (UE#1) in respect of a second user terminal (UE#2), to determine that the first and second user terminals are in the same or neighbouring small cells, and to instruct at least one of the first and second terminals to set up a direct device -to-device, D2D, connection between the first and second user terminals;
in which, in use, the user data is sent via the D2D connection, and control signalling is sent via at least one of the base stations;
**characterised in that** the base stations are small cell base stations;
in which, in use, the two user terminals are in the same cell, control signalling is sent via the small cell base station providing that cell using a Local IP Access, LIPA, in which upon the signal quality of the D2D connection (28) going below a given threshold, further user data is instead sent via the small cell base station providing that cell using Local IP Access, LIPA; or
in which, in use, the two user terminals are in neighbouring cells, and control signalling is sent via the two small cell base stations and the Internet using Selected Internet Protocol Traffic offload, SIPTO, in which upon the signal quality of the D2D connection (28') going below a given threshold, further user data is instead sent via the two small call base stations using Selected Internet Protocol Traffic Offload, SIPTO.

## Patentansprüche

1. Verfahren zur Datenübertragung zwischen einem ersten Benutzerendgerät (UE#1) und einem zweiten Benutzerendgerät (UE#2) in einem zellularen Telekommunikationsnetz (8), umfassend Basisstationen (14), die jeweilige Zellen bereitstellen, wobei das Verfahren Folgendes umfasst:
Erkennen, durch das Netz, einer Rufaufbauanfrage vom ersten Benutzerendgerät in Bezug auf das zweite Benutzerendgerät;
Bestimmen durch das Netz, dass das erste und zweite Benutzerendgerät in der gleichen oder in benachbarten (Fig. 6:3) Kleinzellen sind; und
Anweisen mindestens eines des ersten und zweiten Benutzerendgeräts, durch das Netz, eine direkte Gerät-zu-Gerät-Verbindung, D2D, (28, 28') zwischen dem ersten und zweiten Benutzerendgerät aufzubauen;
wobei die Benutzerdaten über die D2D-Verbindung gesendet werden und die Steuersignalisierung über mindestens eine der Basisstationen gesendet wird;
**dadurch gekennzeichnet, dass** die Basisstationen Kleinzellen-Basisstationen sind;
wobei die zwei Benutzerendgeräte in der gleichen Zelle sind, die Steuersignalisierung über die Kleinzellen-Basisstation gesendet wird, die jene Zelle bereitstellt, die lokalen IP-Zugang, LIPA, verwendet, und nachdem die Signalqualität der D2D-Verbindung (28) unter einen gegebenen Grenzwert fällt, weitere Benutzerdaten stattdessen über die Kleinzellen-Basisstation gesendet werden, die jene Zelle bereitstellt, die lokalen IP-Zugang, LIPA, verwendet; oder
wobei die zwei Benutzerendgeräte in benachbarten Zellen (3) sind, die Steuersignalisierung über die zwei Kleinzellen-Basisstationen gesendet wird, die Selected Internet Protocol Traffic Offload, SIPTO, verwenden, und nachdem die Signalqualität der D2D-Verbindung (28') unter einen gegebenen Grenzwert fällt, weitere Benutzerdaten stattdessen über die zwei Kleinzellen-Basisstationen gesendet werden, die Selected Internet Protocol Traffic Offload, SIPTO, verwenden.

2. Verfahren nach Anspruch 1, wobei das besagte Bestimmen, dass das erste und zweite Benutzerendgerät in der gleichen oder in benachbarten Kleinzellen sind, durch Prüfen einer Aufzeichnung davon erfolgt, in welchen Zellen sich Benutzerendgeräte befinden.

3. Verfahren nach einem beliebigen der vorstehenden Ansprüche, wobei das besagte Bestimmen (Fig. 4:k) durch das Netz, dass das erste und zweite Benutzerendgerät in der gleichen oder in benachbarten Kleinzellen sind, durch eine Anfrage (Fig. 4:a) nach einer direkten D2D-Verbindung vom ersten Benutzerendgerät ausgelöst wird.

4. Zellulares Telekommunikationsnetz (8), umfassend Basisstationen (14), die jeweilige Kleinzellen bereitstellen, wobei das Netz konfiguriert ist, um eine Rufaufbauanfrage von einem ersten Benutzerendgerät (UE#1) in Bezug auf ein zweites Benutzerendgerät (UE#2) zu erkennen, um zu bestimmen, dass das erste und zweite Benutzerendgerät in der gleichen oder in benachbarten Kleinzellen sind, und um mindestens eines aus erstem und zweitem Benutzerendgerät anzuweisen, eine direkte Gerät-zu-Gerät-Verbindung, D2D, zwischen dem ersten und zweiten Benutzerendgerät aufzubauen;
wobei, in Betrieb, die Benutzerdaten über die D2D-Verbindung gesendet werden und die Steuersignalisierung über mindestens eine der Basisstationen gesendet wird;
**dadurch gekennzeichnet, dass** die Basisstationen Kleinzellen-Basisstationen sind; wobei, in Betrieb, die zwei Benutzerendgeräte in der gleichen Zelle sind, die Steuersignalisierung über die Kleinzellen-Basisstation gesendet wird, die jene Zelle bereitstellt, die einen lokalen IP-Zugang, LIPA, verwendet, wobei nachdem die Signalqualität der D2D-Verbindung (28) unter einen gegebenen Grenzwert fällt, weitere Benutzerdaten stattdessen über die Kleinzellen-Basisstation gesendet werden, die jene Zelle bereitstellt, die lokalen IP-Zugang, LIPA, verwendet; oder
wobei, in Betrieb, die zwei Benutzerendgeräte in benachbarten Zellen sind, und die Steuersignalisierung über die zwei Kleinzellen-Basisstationen gesendet wird, die Selected Internet Protocol Traffic Offload, SIPTO, verwenden, wobei nachdem die Signalqualität der D2D-Verbindung (28') unter einen gegebenen Grenzwert fällt, weitere Benutzerdaten stattdessen über die zwei Kleinzellen-Basisstationen gesendet werden, die Selected Internet Protocol Traffic Offload, SIPTO, verwenden.

## Revendications

1. Procédé de transmission de données entre un premier terminal utilisateur (UE#1) et un deuxième terminal utilisateur (UE#2) dans un réseau cellulaire de télécommunications (8) comprenant des stations de base (14) fournissant des cellules respectives, le procédé comprenant les étapes suivantes :
le réseau détecte une demande d'établissement d'appel provenant du premier terminal utilisateur pour le deuxième terminal utilisateur ;
le réseau détermine que le premier et le deuxième terminaux utilisateur sont dans la même petite cellule ou dans des petites cellules voisines (Figure 6:3) ; et
le réseau indique à au moins un terminal parmi le premier et le deuxième terminaux d'établir une connexion directe de dispositif à dispositif, D2D (28,28') entre le premier et le deuxième terminaux utilisateur ;
dans lequel les données d'utilisateur sont envoyées par l'intermédiaire de la connexion D2D et la signalisation de commande est envoyée par l'intermédiaire d'au moins une des stations de base ;
**caractérisé en ce que** les stations de base sont des stations de base de petites cellules ;
dans lequel les deux terminaux utilisateur sont dans la même cellule, la signalisation de commande est envoyée par l'intermédiaire de la station de base de petite cellule fournissant cette cellule en utilisant un accès IP local, LIPA, et lorsque la qualité de signal de la connexion D2D (28) descend en dessous d'un seuil donné, d'autres données d'utilisateur sont envoyées à la place par l'intermédiaire de la station de base de petite cellule fournissant cette cellule en utilisant un accès IP local, LIPA ; ou
dans lequel les deux terminaux utilisateur sont dans des cellules voisines (3), la signalisation de commande est envoyée par l'intermédiaire des deux stations de base de petites cellules en utilisant un délestage de trafic de protocole Internet sélectionné, SIPTO, et lorsque la qualité de signal de la connexion D2D (28') descend en dessous d'un seuil donné, d'autres données d'utilisateur sont envoyées à la place par l'intermédiaire des deux stations de base de petites cellules en utilisant un délestage de trafic de protocole Internet sélectionné, SIPTO.

2. Procédé selon la revendication 1, dans lequel ladite détermination selon laquelle le premier et le deuxième terminaux utilisateur sont dans la même petite cellule ou dans des petites cellules voisines consiste à inspecter un registre indiquant les cellules dans lesquelles les terminaux utilisateur sont situés.

3. Procédé selon l'une quelconque des revendications précédentes dans lequel ladite détermination (Figure 4:k) par le réseau selon laquelle le premier et le deuxième terminaux utilisateur sont dans la même petite cellule ou dans des petites cellules voisines est déclenché par une demande (Figure 4:a) de connexion directe D2D provenant du premier terminal utilisateur.

4. Réseau cellulaire de télécommunications (8) comprenant des stations de base (14) fournissant des petites cellules respectives, le réseau étant configuré pour détecter une demande d'établissement d'appel provenant d'un premier terminal utilisateur (UE#1) pour un deuxième terminal utilisateur (UE#2), pour déterminer que le premier et le deuxième terminaux utilisateur sont dans la même petite cellule ou dans des petites cellules voisines, et pour indiquer à au moins un terminal parmi le premier et le deuxième terminaux d'établir une connexion directe de dispositif à dispositif, D2D, entre le premier et le deuxième terminaux utilisateur ;
dans lequel, en cours d'utilisation, les données d'utilisateur sont envoyées par l'intermédiaire de la connexion D2D et la signalisation de commande est envoyée par l'intermédiaire d'au moins une des stations de base ;
**caractérisé en ce que** les stations de base sont des stations de base de petites cellules ;
dans lequel, en cours d'utilisation, les deux terminaux utilisateur sont dans la même cellule, la signalisation de commande est envoyée par l'intermédiaire de la station de base de petite cellule fournissant cette cellule en utilisant un accès IP local, LIPA, dans lequel lorsque la qualité de signal de la connexion D2D (28) descend en dessous d'un seuil donné, d'autres données d'utilisateur sont envoyées à la place par l'intermédiaire de la station de base de petite cellule fournissant cette cellule en utilisant un accès IP local, LIPA ; ou
dans lequel, en cours d'utilisation, les deux terminaux utilisateur sont dans des cellules voisines, et la signalisation de commande est envoyée par l'intermédiaire des deux stations de base de petites cellules et d'Internet en utilisant un délestage de trafic de protocole Internet sélectionné, SIPTO, dans lequel lorsque la qualité de signal de la connexion D2D (28') descend en dessous d'un seuil donné, d'autres données d'utilisateur sont envoyées à la place par l'intermédiaire des deux stations de base de petites cellules en utilisant un délestage de trafic de protocole Internet sélectionné, SIPTO.
